# EUROPÄISCHE PATENTSCHRIFT

(11) **EP 1 188 378 B1**
(45) Veröffentlichungstag und Bekanntmachung des Hinweises auf die Patenterteilung: **17.11.2004**
(21) Anmeldenummer: 01120116.7
(22) Anmeldetag: 22.08.2001
(51) Int. Cl.: A21C 1/14

(54) **Knet- und Mengmaschine**
Kneading and mixing machine
Machine à pétrir et à mélanger

(30) Priorität: 19.09.2000 DE 20016321 U
(43) Veröffentlichungstag der Anmeldung: 20.03.2002
(73) Patentinhaber: DIOSNA Dierks & Söhne GmbH, 49074 Osnabrück (DE)
(72) Erfinder: Khoub, Mohammad Hashem Ghanizadeh, Dipl.-Ing., D-49088 Osnabrück (DE)
(74) Vertreter: Bünemann, Egon

(56) Entgegenhaltungen:
- EP-A- 0 714 606
- DE-A- 2 421 720
- DE-A- 19 621 286
- DE-A- 19 757 311
- FR-A- 2 422 151
- US-A- 4 504 152

## Beschreibung

Die Erfindung bezieht sich auf eine Knet- und Mengmaschine in einer Ausbildung gemäß dem Oberbegriff des Anspruchs 1.

Ausgehend von einer Maschine dieser Art (DE 197 57 311 A1) befaßt sich die Erfindung mit dem Problem, die Teigaustragung zu verbessern. Die Erfindung löst dieses Problem durch eine Maschine mit den Merkmalen des Anspruchs 1. Hinsichtlich wesentlicher weiterer Ausgestaltungen wird auf die Ansprüche 2 bis 7 verwiesen.

Die erfindungsgemäße Maschine begünstigt und beschleunigt durch den als Leitglied im Bottich verbleibenden Verschlußkörper das Austragen des Bottichinhalts nach seiner Fertigstellung, wobei der Verschlußkörper wie alle anderen mit dem Bottichinhalt in Berührung kommenden Teile durch seinen Verbleib im Bottichraum sowohl gegen Verunreinigungen, als auch gegen Beschädigungen während des Austragvorganges geschützt ist.

Weitere Einzelheiten und Wirkungen ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine Seitenansicht der Knet- und Mengmaschine nach der Erfindung, teilweise im Schnitt, mit in Schließstellung befindlichem Verschlußkörper,
- Fig. 2: eine Ansicht ähnlich Fig. 1 bei in eine Zwischenstellung angehobenem Verschlußkörper,
- Fig. 3: eine Ansicht ähnlich Fig. 1 und 2 zur Veranschaulichung des Verschlußkörpers in seiner Austragstellung, und

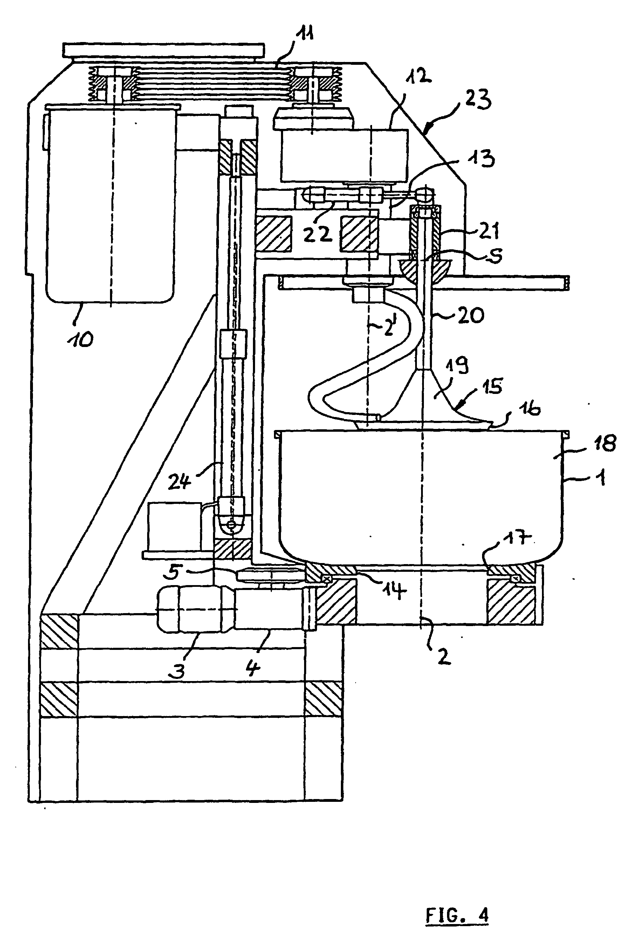

- Fig. 4: eine Ansicht ähnlich Fig. 1 bis 3 zur Veranschaulichung der Maschine in der Service-Stellung ihrer Teile.

Die in der Zeichnung veranschaulichte Maschine zum Kneten und Mengen von Teig, Nahrungsmitteln od.dgl. umfaßt einen um eine vertikale Drehachse 2 rotierend mittels eines Antriebsmotors 3, ein Winkelgetriebe 4 und ein Reibrad 5 antreibbaren Bottich 1, der auf einem Maschinenträger 6 über ein Lager 7 abgestützt ist. In den Bottich 1, der oberseitig durch einen Deckel 8 verschließbar ist, greift zumindest ein um eine Drehachse 2' drehbar gelagertes Arbeitswerkzeug 9 ein. In der Regel kommen zwei untereinander gleiche oder auch voneinander abweichende, im Abstand auf einem Kreisbogen um die Bottichachse 2 nebeneinander angeordnete Arbeitswerkzeuge 9 zum Einsatz. Angetrieben werden die Arbeitswerkzeuge 9 von einem Antriebsmotor 10, der bei dem dargestellten Ausführungsbeispiel über einen Riementrieb 11 und ein Untersetzungsgetriebe 12 eine in einer Kapselung 13 geführte Antriebswelle antreibt.

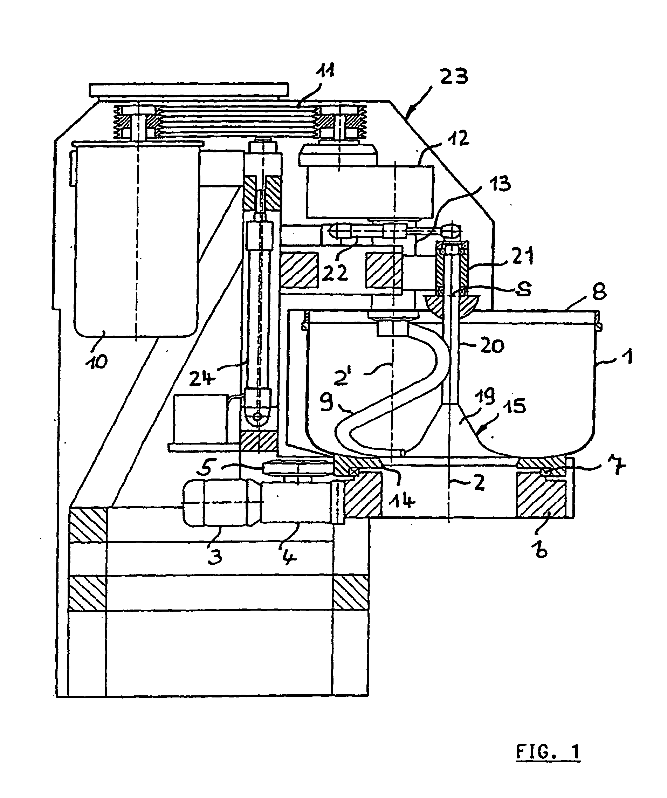

Im Boden des Bottichs 1 befindet sich eine koaxiale Bodenöffnung 14, die durch einen Verschlußkörper 15 verschließbar ist. Dieser Verschlußkörper 15 greift in Schließstellung (Fig. 1) mit einem sich abwärts konisch verjüngenden Randbereich 16 in einen Konussitz 17 im Bottichboden ein und steht mit dem Bottich 1 in Dichtungs- und zugleich Mitnahmeeingriff. Dementsprechend läuft der Verschlußkörper 15 ohne gesonderten Antrieb mit dem Bottich gleichsinnig um.

Auf seiner Oberseite ist der Verschlußkörper 15 als koaxial in den Bottichraum 18 hineinragender, rotationssymmetrischer Leitkörper 19 ausgebildet, der in dem an den Außenrand 16 des Verschlußkörpers 15 angrenzenden Bereich eine an die Hüllkontur des Arbeitsbereiches der Arbeitswerkzeuge 9 angepaßten Verlauf aufweist. Bei dem dargestellten Ausführungsbeispiel ist das Arbeitswerkzeug 9 als Spirale ausgebildet, jedoch können die Arbeitswerkzeuge auch als Knethaken oder -bügel oder in sonst geeigneter Form ausgebildet sein.

An den Leitkörper 19 schließt sich nach oben hin eine koaxiale Betätigungsstange 20 an, die ein um eine horizontale Schwenkachse S schwenkbares Lager 21 durchgreift und an ihrem oberen Ende mit einem Schwenkantrieb 22, z.B. einem Druckmittelzylinder, in Wirkeingriff steht.

Der Verschlußkörper 15 ist über das Lager 21 mitsamt seinem Schwenkantrieb 22 an einem Maschinenkopfteil 23 der Maschine abgestützt, das zugleich die Arbeitswerkzeuge 9 und die Antriebsmittel 10,11,12,13 für diese trägt. Dieses Maschinenkopfteil 23 ist mittels eines Hubzylinders 24 entlang von nicht näher veranschaulichten Vertikalführungen vertikal auf und ab bewegbar, und zwar zwischen einer unteren Betriebsstellung (Fig. 1), in der sich der Verschlußkörper 15 in Schließstellung befindet, und einer oberen Service-Stellung, in der der Verschlußkörper 15 oberhalb des oberen Randes des Bottichs 1 gelegen ist. In dieser Service-Stellung sind die Werkzeuge und der Verschlußkörper frei für Reinigungs- und Service-Arbeiten zugänglich, da mit dem Anheben des Maschinenkopfteils 23 auch der Bottichdeckel 8 mit angehoben wird.

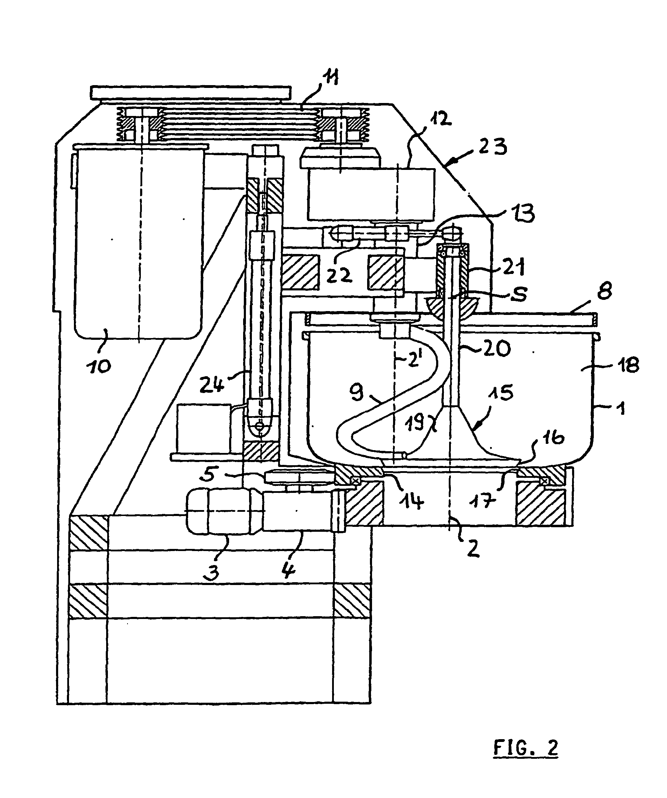

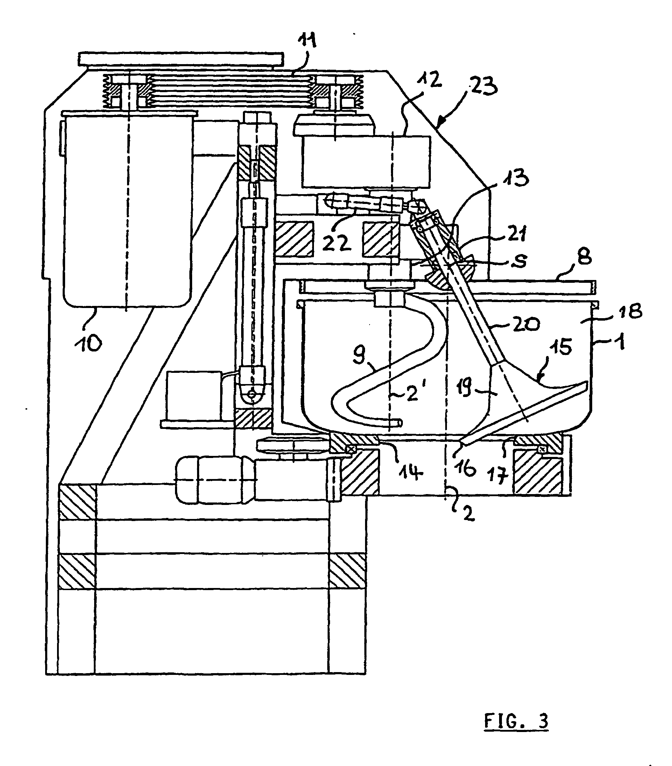

In der in Fig. 1 veranschaulichten Betriebsstellung der Teile nimmt der Verschlußkörper 15 seine Schließstellung ein. Nach Fertigstellung der Bearbeitung eines Bottichinhalts wird zu dessen Austragen zunächst der Verschlußkörper 15 durch Hochfahren des Maschinenkopfteils 23 aus seiner Verschlußstellung nach oben in eine Zwischenstellung (Fig. 2) verbracht, in der der Verschlußkörper 15 mit seiner Unterseite gerade oberhalb der Innenfläche des Bottichbodens gelegen ist. Für den eigentlichen Austragvorgang wird nun der Verschlußkörper 15 in eine Austragstellung (Fig. 3) verschwenkt, in der er innerhalb des Bottichs 1 verbleibend die Bodenöffnung 14 freigibt, während er zugleich eine Leitfunktion beim Austragvorgang übernimmt, bei dem der Bottich eine zur vorhergehenden Arbeitsrichtung entgegengesetzte Drehbewegung ausführt. Diese wird durch einen nicht dargestellten Umschalter herbeigeführt, der frühestens betätigt wird, wenn der Verschlußkörper 15 die Zwischenstellung gemäß Fig. 2 erreicht, und spätestens eine Betätigung erfährt, wenn der Verschlußkörper 15 seine Austragstellung gemäß Fig. 3 erreicht.

Während des Austragens des Bottichinhalts kann der Verschlußkörper 15 mit Hilfe seines Schwenkantriebs 22 alternierend zwischen der Zwischenstellung gemäß Fig. 2 und der Austragstellung gemäß Fig. 3 verschwenkt werden, um den Austragvorgang zusätzlich zu intensivieren.

Durch das Austragen des Bottichinhaltes gelangt dieser durch Schwerkraft in einen Rollbottich, in einen Transporteur zu einer weiteren Bearbeitungsmaschine oder direkt in den Einlauf einer der Knet- und Mengmaschine nebengeordneten Weiterverarbeitungsmaschine.

## Patentansprüche

1. Knet- und Mengmaschine für Teig, Nahrungsmittel o.dgl., mit einem um eine vertikale Drehachse (2) rotierend angetriebenen Bottich (1), zumindest einem in diesen eingreifenden, um eine zur Bottichdrehachse (2) parallele Achse (2') angetrieben drehbaren Arbeitswerkzeug (9) und einem eine koaxiale Bodenöffnung (14) im Bottichboden verschließenden Verschlußkörper (15), der zum Austragen eines fertig bearbeiteten Bottichinhalts mittels einer Hubvorrichtung (24) vertikal in eine Zwischenstellung bewegbar und anschließend mittels einer Stellvorrichtung (22) um eine horizontale Schwenkachse (20) in eine Austragstellung verschwenkbar ist, **dadurch gekennzeichnet, daß** der Verschlußkörper (15) aus seiner Verschlußstellung aufwärts in die Zwischenstellung bewegbar und anschließend innerhalb des Bottichs (1) in die Austragstellung verschwenkbar ist.

2. Maschine nach Anspruch 1, **dadurch gekennzeichnet, daß** die Stellvorrichtung (22) für den Verschlußkörper (15) an einem Maschinenkopfteil (23) abgestützt ist, das zugleich das bzw. die Arbeitswerkzeug(e) (9) und dessen bzw. deren Antrieb (10,11,12,13) trägt und als Ganzes mittels eines Hubantriebs (24) zwischen einer unteren Betriebsstellung, in der sich der Verschlußkörper (15) in Schließstellung befindet, und einer oberen Service-Stellung bewegbar ist, in der sich der Verschlußkörper (15) oberhalb des Bottichrandes befindet.

3. Maschine nach Anspruch 1 oder 2, **dadurch gekennzeichnet, daß** in Schließstellung der Verschlußkörper (15) mit einem sich abwärts konisch verjüngenden Randbereich (16) in einen Konussitz (17) im Bottichboden eingreift und mit dem Bottich (1) in Dichtungs- und Mitnahmeeingriff steht.

4. Maschine nach einem der Ansprüche 1 bis 3, **dadurch gekennzeichnet, daß** der Verschlußkörper (15) auf seiner Oberseite als koaxial in den Bottichraum (18) hineinragender, rotationssymmetrischer Leitkörper (19) ausgebildet ist, an den sich oberseitig koaxial eine Betätigungsstange (20) anschließt, die ein um die horizontale Schwenkachse (S) für den Verschlußkörper (15) schwenkbares Lager (21) durchgreift und an ihrem oberen Ende mit dem Schwenkantrieb (22) in Wirkverbindung steht.

5. Maschine nach einem der Ansprüche 1 bis 4, **dadurch gekennzeichnet, daß** der an den Außenrand (16) des Verschlußkörpers (15) angrenzende Bereich des Leitkörpers (19) eine an die Hüllkontur des Arbeitsbereiches des beitswerkzeugs (9) bzw. der Arbeitswerkzeuge angepaßten Verlauf aufweist.

6. Maschine nach einem der Ansprüche 1 bis 5, **dadurch gekennzeichnet, daß** nach dem Erreichen der Zwischenstellung und spätestens mit Erreichen der Austragstellung durch den Verschlußkörper (15) ein Umschalter den Antrieb für den Bottich (1) reversiert.

7. Maschine nach einem der Ansprüche 1 bis 6, **dadurch gekennzeichnet, daß** der Verschlußkörper (15) während des Austragens des Bottichinhalts durch den Schwenkantrieb (22) in alternierende Schwenkbewegungen versetzbar ist.

## Claims

1. Kneading and mixing machine for dough, foodstuffs, and the like, with a driven vat (1) rotating about a vertical axis of rotation (2), at least one rotatable working tool (9) engaging in the vat and driven about an axis (2') parallel to the axis of rotation (2) of the vat, and with a closure body (15) which doses a coaxial floor aperture (14) in the base of the vat, which can be moved vertically into an intermediate position by means of a lifting device (24) and can then be pivoted by means of an adjustment device (22) about a horizontal pivot axis (20) into a position for the extraction of finished processed vat contents, **characterised in that** the dosure body (15) can be moved out of its dosure position upwards into the intermediate position and can then be pivoted inside the vat (1) into the extraction position.

2. Machine according to claim 1, **characterised in that** the adjustment device (22) for the closure body (15) is supported on the machine head part (23), which simultaneously supports the working tool(s) (9) and its/their drive unit (10,11,12,13), and can be moved as a whole by means of a lifting drive (24) between a lower operating position, in which the closure body (15) is in the closed position, and an upper service position, in which the closure body (15) is located above the edge of the vat

3. Machine according to claim 1 or 2, **characterised in that**, in the dosed position, the closure body (15) engages with an edge area (16), tapering conically downwards, into a conical seat (17) in the vat base, and is in sealing and sympathetic movement engagement with the vat (1).

4. Machine according to one of claims 1 to 3, **characterised in that** the dosure body (15) is formed on its upper side as a rotationally-symmetrical guide body (19) projecting coaxially into the vat chamber (18), on the upper side of which an actuating rod (20) connects coaxially, which engages through a bearing (21) capable of pivoting about the horizontal pivot axis (S) for the closure body (15) and is in operational connection at its upper end with the pivot drive (22).

5. Machine according to one of daims 1 to 4, **characterised in that** the area of the guide body (19) adjacent to the outer edge (16) of the dosure body (15) exhibits a movement course which is adapted to the envelope contour of the working area of the working tool (9) or tools.

6. Machine according to one of claims 1 to 5, **characterised in that**, after the closure body (15) reaches the intermediate position, and at the latest on its reaching the extraction position, a reversing switch reverses the drive for the vat (1).

7. Machine according to one of claims 1 to 6, **characterised in that** the closure body (15) can be moved in alternating pivot movements by the pivot drive (22) during the extraction of the contents of the vat

## Revendications

1. Machine à pétrir et à mélanger pour une pâte, des denrées alimentaires ou analogues, avec un pétrin (1) entraîné en rotation autour d'un axe de rotation vertical (2), au moins un outil de travail rotatif (9) pénétrant dans celui-ci et entraîné autour d'un axe (2') parallèle à l'axe de' rotation (2) du pétrin et un corps de fermeture (15) fermant une ouverture de fond coaxiale (14) dans le fond du pétrin, qui, pour extraire une charge de pétrin complètement travaillée, est mobile verticalement dans une position intermédiaire au moyen d'un dispositif de levage (24) et qui est ensuite pivotant dans une position d'extraction autour d'un axe de pivotement horizontal (20) au moyen d'un dispositif de déplacement (22), **caractérisée en ce que** le corps de fermeture (15) est mobile vers le haut depuis sa position de fermeture jusqu'à la position intermédiaire et est ensuite pivotant dans la position d'extraction à l'intérieur du pétrin (1).

2. Machine selon la revendication 1, **caractérisée en ce que** le dispositif de déplacement (22) pour le corps de fermeture (15) est supporté sur une partie de tête (23) de la machine, qui porte en même temps le ou les outil(s) de travail (9) ainsi que leur(s) entraînement(s) (10, 11, 12, 13) et est mobile en un ensemble au moyen d'un dispositif de levage (24) entre une position de travail basse, dans laquelle le corps de fermeture (15) se trouve en position de fermeture, et une position d'entretien haute, dans laquelle le corps de fermeture (15) se trouve au-dessus du bord du pétrin.

3. Machine selon la revendication 1 ou 2, **caractérisée en ce qu'**en position de fermeture, le corps de fermeture (15) s'engage avec une région de bord (16) se rétrécissant en cône vers le bas dans un siège conique (17) dans le fond du pétrin et est assemblé de façon étanche et solidaire avec le pétrin (1).

4. Machine selon l'une quelconque des revendications 1 à 3, **caractérisée en ce que** le corps de fermeture (15) est configuré, sur sa face supérieure, en un corps de guidage (19) à symétrie de révolution, pénétrant coaxialement dans l'espace (18) du pétrin, auquel se raccorde coaxialement du côté supérieur une tige de commande (20) qui traverse un palier (21) pivotant autour de l'axe de pivotement horizontal (S) pour le corps de fermeture (15) et se trouve en liaison active à son extrémité supérieure avec l'entraînement de pivotement (22).

5. Machine selon l'une quelconque des revendications 1 à 4, **caractérisée en ce que** la région du corps de guidage (19) adjacente au bord extérieur (16) du corps de fermeture (15) présente un tracé adapté au contour d'enveloppe de la région de travail de l'outil de travail (9) ou selon le cas des outils de travail.

6. Machine selon l'une quelconque des revendications 1 à 5, **caractérisée en ce qu'**après avoir atteint la position intermédiaire et au plus tard à l'arrivée du corps de fermeture (15) dans la position d'extraction, un inverseur inverse l'entraînement pour le pétrin (1).

7. Machine selon l'une quelconque des revendications 1 à 6, **caractérisée en ce que** le corps de fermeture (15) est déplaçable dans des positions de pivotement alternées au moyen de l'entraînement de pivotement (22) pendant l'extraction de la charge du pétrin.
